(19)

**Europäisches Patentamt**
**European Patent Office**
**Office européen des brevets**

(11) **EP 3 570 199 A1**

(12) **EUROPEAN PATENT APPLICATION**

(43) Date of publication:
**20.11.2019 Bulletin 2019/47**

(51) Int Cl.:
***G06F 21/64*** *(2013.01)*    ***G06Q 20/38*** *(2012.01)*

(21) Application number: **18181560.6**

(22) Date of filing: **04.07.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.05.2018   CN 201810457962**

(71) Applicant: **Beijing Blockchain Enjoy Future Technology Co., Ltd.**
**100102 Beijing (CN)**

(72) Inventors:
• **DUAN, Kai**
  **Chaoyang District, Beijing, 100102 (CN)**
• **CHEN, Jianwu**
  **Chaoyang District, Beijing, 100102 (CN)**

(74) Representative: **Sun, Yiming**
**HUASUN Patent- und Rechtsanwälte**
**Friedrichstraße 33**
**80801 München (DE)**

(54) **METHOD FOR INTELLIGENTLY SELECTING ACCOUNTING NODE OF BLOCKCHAIN**

(57)    A method for intelligently selecting an accounting node of a blockchain, relating to fields of blockchain, virtual currency and artificial intelligence, is provided, including steps of: (1), based on block data, calculating a node capability value of each accounting node; (2), making statistics of threshold values of the node capability values of every node; and (3), according to the threshold values, determining a current accounting node, and thereafter randomly selecting other nodes, so as to complete node selection. According to the present invention, based on block data and miner data of various dimensions, an intelligent distribution mechanism of accounting rights or mining rights is adopted; and meanwhile, a random distribution of accounting rights or mining rights is also adopted for avoiding hacker attacks. Therefore, on a premise of guaranteeing fairness, decentration and safety of the blockchain, problems of energy waste and low accounting efficiency due to mining conflict are solved.

**Description**

**FIELD OF INVENTION**

The present invention relates to fields of blockchain, virtual currency and artificial intelligence, and more particularly to a method for intelligently selecting an accounting node of a blockchain.

**DESCRIPTION OF RELATED ARTS**

In 2009, the enlightenment period of Bitcoin, the miners can easily mine hundreds of Bitcoins in a week merely with the home computer. However, with the rapid growth of the Bitcoin miners and the continuous improvement of the Bitcoin mining hardware, Bitcoin mining has been translated from the experiment made by the temporary worker at home into the large-scale equipment operated by the professionals, in which millions of dollars are invested. Meanwhile, with the progressive increase of the Bitcoin miners, all the machines work together, which wastes the electric power resource, causing the increasingly prominent energy consumption problem. It is estimated by Morgan Stanley in one published research report that the mining business of Bitcoin consumes about 36 terawatt hours of energy one year, which is equivalent to the total annual energy consumption amount of Qatar. It is also pointed out by the report that: in 2018, the electric power demand of Bitcoin will increase to more than three times, and the power consumption may be over 125 terawatt hours, which is equivalent to the total annual energy consumption amount of Argentina. The mining principle of Bitcoin is that: the higher computation power, the easier new Bitcoin is mined and transfer transaction is recorded in the account book, which causes the serious waste of the computing resource.

Aimed at the current situation, BM designed the DPoS (Delegated Proof of Stake) system. In the DPoS system, all of the people do not mine together, but several people are assigned as witnesses to be responsible for accounting. In the EOS (Enterprise operation system), twenty-one nodes are selected as the witnesses responsible for accounting alternately. In the above way, the accounting speed is greatly increased; meanwhile, the whole system greatly saves the electric energy. The accounting speed in the DPoS mode is fast and power-saving. However, the human factor plays the leading role in the above manner, which fails to guarantee the decentration. Thus, it is required to develop a method for intelligently distributing the accounting rights or the mining rights, which is able to guarantee the fairness and decentration, and avoid the interference of the human factor.

**SUMMARY OF THE PRESENT INVENTION**

An object of the present invention is to provide a method for intelligently selecting an accounting node of a blockchain, which solves problems of conventional mining methods that fairness and decentration cannot be guaranteed and mining efficiency is low due to adopting manual accounting.

Technical solutions adopted by the present invention are described as follows.

A method for intelligently selecting an accounting node of a blockchain comprises steps of:

(1), based on block data, calculating a node capability value of each accounting node;

(2), making statistics of threshold values of the node capability values of every accounting node; and

(3), according to the threshold values, determining a current accounting node, and thereafter randomly selecting other nodes, so as to complete node selection.

Preferably, in the step (1), the node capability value includes a node transaction amount, a node information processing capability, and a total amount of node transaction service charge.

Preferably, the node transaction amount is calculated through following steps of:

(a), calculating the sum of corresponding block numbers, wherein a calculation formula thereof is:

$$O = j = K\left(i\right)L_{j},$$

wherein: $L_j$ is a number corresponding to a block amount $K(i)$ mined by an $i$th node; $j \in [1, K(i)]$; $O$ represents the sum of the corresponding block numbers;

(b), calculating a statistical weight, wherein a calculation formula thereof is:

$$\delta_j = \frac{L_j}{O}, \sum \delta_j = 1,$$

wherein: $\delta_j$ represents the statistical weight; $O$ represents the sum of the corresponding block numbers; and
(c), calculating the transaction amount of blocks created by the node, wherein a calculation formula thereof is:

$$N_{tr}(i) = \sum_{j=1}^{K(i)} \delta_j * Tr(i)(j),$$

wherein: $Tr(i)(j)$ is a transaction amount of each block.

Preferably, the node information processing capability is calculated through a following formula of:

$$C(i) = \alpha * S(i) + \beta * Cal(i) + \gamma * Bandwithd(i),$$

wherein: $C(i)$ represents an information processing capability of the $i^{th}$ node; $S(i)$ represents a current available storage space of the $i^{th}$ node; $Cal(i)$ represents a processor computation speed of the $i$th node; $Bandwithd(i)$ represents a current network bandwidth of the $i^{th}$ node; $\alpha$, $\beta$ and $\gamma$ are calculation weights, meeting $\alpha+\beta+\gamma=1$.
Preferably, the total amount of the node transaction service charge is calculated through following steps of:

(aa), calculating a transaction service charge of each block, wherein a calculation formula thereof is:

$$Fee_j = \sum_{a=1}^{Tr(i)(j)} f_a,$$

wherein: $f_a$ is a service charge of each transaction; $Tr(i)(j)$ is the transaction amount of each block; a value range of a meets $a \in [1, Tr(i)(j)]$; $L_j$ is the number corresponding to the block amount $K(i)$ occupied by the $i^{th}$ node; $j \in [1, K(i)]$; and
(bb), calculating the total amount of the node transaction service charge, wherein a calculation formula thereof is:

$$Fee_{total} = \sum_{j=1}^{K(i)} Fee_j,$$

wherein: $K(i)$ is the block amount occupied by the $i^{th}$ node.

Preferably, the threshold value of the node capability value of each node is calculated through a following formula of:

$$y(i) = w_1 * x_1 + w_2 * x_2 + w_3 * x_3,$$

wherein: $w_1+w_2+w_3=1$; $y(i)$ is the threshold value of the node capability value of each node; $x_1$ is the transaction amount of the blocks created by the node; $x_2$ is the node information processing capability; $x_3$ is the total amount of the node transaction service charge.

Preferably, the step (3) particularly comprises steps of:

(3.1), according to the threshold value $y(i)$ of the node capability value of each node, assuming a minimum value and a maximum value thereof respectively to be $y_{min}$ and $y_{max}$; normalizing a region of $[y_{min}, y_{max}]$ to $[a_1, b_1]$; with an interval of $c_1$, dividing the region into $(b_1-a_1)/c_1$ categories;

(3.2), mapping the threshold value $y(i)$ into a value $Class_i$ of a first categorical space, wherein a calculation formula thereof is:

$$Class_i = \frac{y(i)}{y_{max} - y_{min} + 1},$$

wherein: $y_{min}$ is the minimum value of the threshold value $y(i)$; $y_{max}$ is the maximum value of the threshold value $y(i)$; $y(i)$ is the threshold value of the node capability value of the $i^{th}$ node;

(3.3), according to the value $Class_i$ of the first categorical space, determining a region of $[n, n+1]$; after determining a category of the current node is the $(n+1)^{th}$ category, judging whether n is larger than a categorical threshold $e_1$, wherein a value range of $e_1$ is $[0, (b_1-a_1)/c_1]$; if n is larger than the categorical threshold $e_1$, meaning the current node is a fixed node; otherwise, executing step (ddd);

(ddd), calculating an information processing capability of a non-fixed node, namely the information processing capability of the node except the fixed node, wherein a calculation formula thereof is:

$$z(i) = x_3,$$

wherein: $z(i)$ is the information processing capability of the non-fixed node; $x_3$ is the total amount of the node transaction service charge;

(3.4), according to a value of the information processing capability $z(i)$ of the non-fixed node, assuming a minimum value and a maximum value thereof respectively to be $z_{min}$ and $z_{max}$; normalizing a region of $[z_{min}, z_{max}]$ to $[a_2, b_2]$; with an interval of $c_2$, dividing the region into $(b_2-a_2)/c_2$ categories; and

(3.5), mapping the information processing capability $z(i)$ of the non-fixed node into a value $Class2_i$ of a second categorical space, wherein a calculation formula thereof is:

$$Class2_i = \frac{z(i)}{z_{max} - z_{min} + 1},$$

wherein: $z_{min}$ is the minimum value of the information processing capability $z(i)$; $z_{max}$ is the maximum value of the information processing capability $z(i)$; $z(i)$ is the information processing capability of the non-fixed node;

according to the value $Class2_i$, determining that a region to which the current node belongs is $[m, m+1]$ and the current node belongs to the $(m+1)^{th}$ category; making statistics of all nodes that m is larger than a categorical threshold $e_2$, wherein a value range of $e_2$ is $[0, (b_2-a_2)/c_2]$, and selecting R nodes to serve as random nodes, so as to complete the node selection, wherein a value of R is a random number.

In conclusion, the present invention has following beneficial effects with adopting the above technical solutions.

Firstly, according to the present invention, through calculating the node capability values of every node and making statistics of the thresholds values thereof, the current node is determined and other nodes are randomly selected, for completing selection of the accounting node. Therefore, the node having the strong computation power and great transaction amount is selected for mining and accounting; and the random nodes are placed for increasing the safety of block mining and accounting. The present invention solves the problems of the conventional mining or accounting methods that the fairness and decentration cannot be guaranteed due to adopting the manual node selection, so that the energy consumption is saved and meanwhile the efficiency and safety of mining and accounting are increased.

Secondly, according to the present invention, the fixed node is intelligently selected to be involved in block mining and accounting, and the mining rights or accounting rights is reasonably distributed, which greatly saves the energy consumption and meanwhile avoids the risks of hostile attack due to manual selection.

Thirdly, according to the present invention, the node capability value is judged through comprehensively considering the factors such as the mined block amount, the transaction amount included in each block, the current information processing capability of the node and the total amount of the transaction service charge in each block, and the factors such as the computation power, the bandwidth and the participation ability of the past node are fully utilized, so as to decrease the conflict probability of node mining or accounting of the whole blockchain and increase the transaction record processing efficiency of the node, thereby greatly increasing the efficiency of block mining and accounting.

Fourthly, according to the present invention, based on the selection of the fixed node, random nodes are additionally added, which increases the safety of bock mining and decreases the possibility of hacker attack.

## BRIEF DESCRIPTION OF THE DRAWINGS

The present invention will be illustrated with embodiments and accompanying drawings.

Fig. 1 is a sketch view of node selection according to the present invention.

Fig. 2 is a flow diagram of the present invention.

DETAILED DESCRIPTION OF THE PREFERRED EMBODIMENT

Except mutually exclusive features and/or steps, all of the features, methods or steps disclosed by the present invention can be combined in any manner.

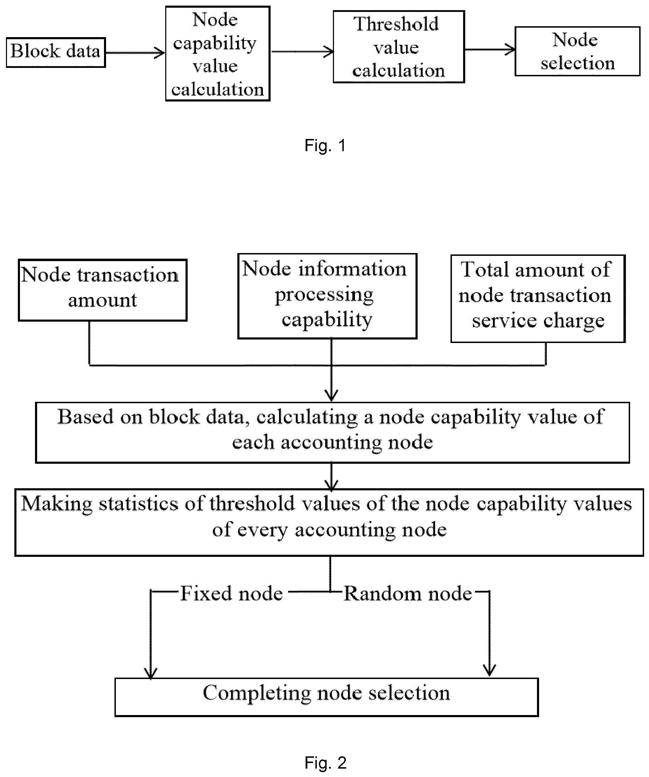

The present invention is illustrated in detail with Fig. 1 and Fig. 2 as follows.

Based on intelligent analysis of the node to which the block belongs and the transaction data amount included in each block, a method for calculating the node capability value is provided to serve as a selection basis of the accounting node, so as to decrease the node mining conflict probability of the whole blockchain and increase the transaction record processing efficiency of the node. The present invention comprises an accounting node capability value calculation module, a threshold value calculation module and a node selection module.

The node capability value includes a block amount mined by the node, a transaction amount of each block, a current information processing capability of the node, and a total amount of transaction service charge of the node. The information processing capability of the node includes a current processing speed of the node computing center, a current network bandwidth and a current available storage space. The block amount minded by the node means a total amount of the blocks mined by the node from participation to the present. The transaction amount of each block means the data amount of the packaged transaction in one block mined by the node.

The threshold value calculation means making data statistics according to the node capability values of all involved nodes, and an objective function thereof is $y(i)=w_1*x_1+w_2*x_2+w_3*x_3$; through training, a group of parameters $w_1$-$w_3$ with high robustness are obtained; $x_1$, $x_2$, and $x_3$ respectively represent the transaction amount of blocks created by the node, the node information processing capability, and the total amount of the node transaction service charge; $y(i)$ represents the threshold value of the node capability value of each node; and another objective energy function $z(i)=x_3$ exists, wherein $z(i)$ represents the information processing capability of the non-fixed node, namely the computation power.

For the node selection module, the node capability value y is calculated according to the current data; if y is larger than the threshold n of fixed node selection, the current node is selected as the fixed node and determined as the current accounting node; the computation power z of each node in the remaining nodes is calculated; if z is larger than the threshold m of random node selection, R nodes are randomly selected to be involved in block mining, for completing node selection.

Preferred embodiment

A method for intelligently selecting an accounting node of a blockchain comprises steps of:

(1), based on block data, calculating a node capability value of each accounting node;

(2), making statistics of threshold values of the node capability values of every accounting node; and

(3), according to the threshold values, determining a current accounting node, and thereafter randomly selecting other nodes, so as to complete node selection.

In the step (1), the node capability value includes a node transaction amount, a node information processing capability, and a total amount of node transaction service charge.

The node transaction amount is calculated through following steps of:

(a), calculating the sum of corresponding block numbers, wherein a calculation formula thereof is:

$$O = j = K(i)L_j,$$

wherein: $L_j$ is a number corresponding to a block amount $K(i)$ mined by an $i^{th}$ node; $j \in [1, K(i)]$; $O$ represents the sum of the corresponding block numbers;

(b), calculating a statistical weight, wherein a calculation formula thereof is:

$$\delta_j = \frac{L_j}{O}, \sum \delta_j = 1,$$

wherein: $\delta_j$ represents the statistical weight; $O$ represents the sum of the corresponding block numbers; and

(c), calculating the transaction amount of blocks created by the node, wherein a calculation formula thereof is:

$$N_{tr}(i) = \sum_{j=1}^{K(i)} \delta_j * Tr(i)(j),$$

wherein: $Tr(i)(j)$ is a transaction amount of each block.

The node information processing capability is calculated through a following formula of:

$$C(i) = \alpha * S(i) + \beta * Cal(i) + \gamma * Bandwithd(i),$$

wherein: $C(i)$ represents an information processing capability of the $i^{th}$ node; $S(i)$ represents a current available storage space of the $i^{th}$ node; $Cal(i)$ represents a processor computation speed of the $i^{th}$ node; $Bandwithd(i)$ represents a current network bandwidth of the $i^{th}$ node; $\alpha$, $\beta$ and $\gamma$ are calculation weights, meeting $\alpha + \beta + \gamma = 1$.

The total amount of the node transaction service charge is calculated through following steps of:

(aa), calculating a transaction service charge of each block, wherein a calculation formula thereof is:

$$Fee_j = \sum_{a=1}^{Tr(i)(j)} f_a,$$

wherein: $f_a$ is a service charge of each transaction; $Tr(i)(j)$ is the transaction amount of each block; a value range of a meets $a \in [Tr(i)(y)]$; $L_j$ is the number corresponding to the block amount $K(i)$ occupied by the $i^{th}$ node; $j \in [1, K(i)]$; and

(bb), calculating the total amount of the node transaction service charge, wherein a calculation formula thereof is:

$$Fee_{total} = \sum_{j=1}^{K(i)} Fee_j,$$

wherein: $K(i)$ is the block amount occupied by the $i^{th}$ node.

The threshold value of the node capability value of each node is calculated through a following formula of:

$$y\big(i\big) = w_1 * x_1 + w_2 * x_2 + w_3 * x_3,$$

wherein: $w_1+w_2+w_3=1$; $y(i)$ is the threshold value of the node capability value of each node; $x_1$ is the transaction amount of the blocks created by the node; $x_2$ is the node information processing capability; $x_3$ is the total amount of the node transaction service charge.

The step (3) particularly comprises steps of:

(3.1), according to the threshold value $y(i)$ of the node capability value of each node, assuming a minimum value and a maximum value thereof respectively to be $y_{min}$ and $y_{max}$; normalizing a region of $[y_{max}]$ to [0, 10]; with an interval of 1, dividing the region into ten categories;

(3.2), mapping the threshold value $y(i)$ into a value $Class_i$ of a first categorical space, wherein a calculation formula thereof is:

$$Class_i = \frac{y\big(i\big)}{y_{max} - y_{min} + 1},$$

wherein: $y_{min}$ is the minimum value of the threshold value $y(i)$ ; $y_{max}$ is the maximum value of the threshold value $y(i)$; $y(i)$ is the threshold value of the node capability value of the $i^{th}$ node;

(3.3), according to the value $Class_i$ of the first categorical space, determining a region of [n, n+1]; after determining a category of the current node is the $(n+1)^{th}$ category, judging whether n is larger than 5; if n is larger than 5, meaning the current node is a fixed node; otherwise, executing step (ddd);

(ddd), calculating an information processing capability of a non-fixed node, namely the information processing capability of the node except the fixed node, wherein a calculation formula thereof is:

$$z\big(i\big) = x_3,$$

wherein: $z(i)$ is the information processing capability of the non-fixed node; $x_3$ is the total amount of the node transaction service charge;

(3.4), according to a value of the information processing capability $z(i)$ of the non-fixed node, assuming a minimum value and a maximum value thereof respectively to be $z_{min}$ and $z_{max}$; normalizing a region of $[z_{min}, z_{max}]$ to [0, 10]; with an interval of 1, dividing the region into ten categories; and

(3.5), mapping the information processing capability $z(i)$ of the non-fixed node into a value $Class2_i$ of a second categorical space, wherein a calculation formula thereof is:

$$Class2_i = \frac{z\big(i\big)}{z_{max} - z_{min} + 1},$$

wherein: $z_{min}$ is the minimum value of the information processing capability $z(i)$; $z_{max}$ is the maximum value of the information processing capability $z(i)$; $z(i)$ is the information processing capability of the non-fixed node;

according to the value $Class2_i$, determining that a region to which the current node belongs is [m, m+1] and the current node belongs to the $(m+1)^{th}$ category; making statistics of all nodes that m>3, and selecting R nodes to serve as random nodes, wherein a value of R is a random number, such as 1, 3 and 5.

The present invention aims at solving the problems of accounting conflict, low accounting efficiency and energy waste caused by mining calculation of larger number of the miners, and avoiding the problems of unfairness and non-decentration caused by selecting the accounting node with manual voting. Based on the block data and the miner data of various dimensions, the intelligent distribution mechanism of accounting rights or mining rights is adopted; meanwhile, the random distribution of accounting rights or mining rights is also adopted for avoiding the hacker attack. Therefore, on the premise of guaranteeing the fairness, decentration and safety of the blockchain, the problems of energy waste and low accounting efficiency caused by the mining conflict are solved.

**Claims**

1. A method for intelligently selecting an accounting node of a blockchiain, comprising steps of:

    (1), based on block data, calculating a node capability value of each accounting node;
    (2), making statistics of threshold values of the node capability values of every accounting node; and
    (3), according to the threshold values, determining a current accounting node, and thereafter randomly selecting other nodes, so as to complete node selection.

2. The method for intelligently selecting the accounting node of the blockchain, as recited in claim 1, wherein: in the step (1), the node capability value includes a node transaction amount, a node information processing capability, and a total amount of node transaction service charge.

3. The method for intelligently selecting the accounting node of the blockchain, as recited in claim 2, wherein: the node transaction amount is calculated through following steps of:

    (a), calculating the sum of corresponding block numbers, wherein a calculation formula thereof is:

$$O = j = K(i)L_j,$$

    wherein: $L_j$ is a number corresponding to a block amount $K(i)$ mined by an $i^{th}$ node; $j \in [1, K(i)]$; $O$ represents the sum of the corresponding block numbers;
    (b), calculating a statistical weight, wherein a calculation formula thereof is:

$$\delta_j = \frac{L_j}{O}, \sum \delta_j = 1,$$

    wherein: $\delta_j$ represents the statistical weight; $O$ represents the sum of the corresponding block numbers; and
    (c), calculating the transaction amount of blocks created by the node, wherein a calculation formula thereof is:

$$N_{tr}(i) = \sum_{j=1}^{K(i)} \delta_j * Tr(i)(j),$$

    wherein: $Tr(i)(j)$ is a transaction amount of each block.

4. The method for intelligently selecting the accounting node of the blockchain, as recited in claim 2, wherein: the node information processing capability is calculated through a following formula of:

$$C(i) = \alpha * S(i) + \beta * Cal(i) + \gamma * Bandwithd(i),$$

    wherein: $C(i)$ represents an information processing capability of an $i^{th}$ node; $S(i)$ represents a current available storage space of the $i^{th}$ node; $Cal(i)$ represents a processor computation speed of the $i^{th}$ node; $Bandwithd(i)$ represents a current network bandwidth of the $i^{th}$ node; $\alpha$, $\beta$ and $\gamma$ are calculation weights, meeting $\alpha + \beta + \gamma = 1$.

5. The method for intelligently selecting the accounting node of the blockchain, as recited in claim 2, wherein: the total amount of the node transaction service charge is calculated through following steps of:

(aa), calculating a transaction service charge of each block, wherein a calculation formula thereof is:

$$Fee_j = \sum_{a=1}^{Tr(i)(j)} f_a \; ,$$

wherein: $f_a$ is a service charge of each transaction; $Tr(i)(j)$ is a transaction amount of each block; a value range of $a$ meets $a \in [1, Tr(i)(j)]$; $L_j$ is a number corresponding to a block amount $K(i)$ occupied by an $i$th node; $j \in [1, K(i)]$; and

(bb), calculating the total amount of the node transaction service charge, wherein a calculation formula thereof is:

$$Fee_{total} = \sum_{j=1}^{K(i)} Fee_j \; ,$$

wherein: $K(i)$ is the block amount occupied by the $i$th node.

6. The method for intelligently selecting the accounting node of the blockchain, as recited in claim 2, wherein: the threshold value of the node capability value of each node is calculated through a following formula of:

$$y(i) = w_1 * x_1 + w_2 * x_2 + w_3 * x_3 \; ,$$

wherein: $w_1 + w_2 + w_3 = 1$; $y(i)$ is the threshold value of the node capability value of each node; $x_1$ is the transaction amount of blocks created by the node; $x_2$ is the node information processing capability; $x_3$ is the total amount of the node transaction service charge.

7. The method for intelligently selecting the accounting node of the blockchain, as recited in claim 6, wherein: the step (3) particularly comprises steps of:

(3.1), according to the threshold value $y(i)$ of the node capability value of each node, assuming a minimum value and a maximum value thereof respectively to be $y_{min}$ and $y_{max}$; normalizing a region of $[y_{min}, y_{max}]$ to $[a_1, b_1]$; with an interval of $C_1$, dividing the region into $(b_1-a_1)/c_1$ categories;

(3.2), mapping the threshold value $y(i)$ into a value $Class_i$ of a first categorical space, wherein a calculation formula thereof is:

$$Class_i = \frac{y(i)}{y_{max} - y_{min} + 1} \; ,$$

wherein: $y_{min}$ is the minimum value of the threshold value $y(i)$ ; $y_{max}$ is the maximum value of the threshold value $y(i)$; $y(i)$ is the threshold value of the node capability value of an $i$th node;

(3.3), according to the value $Class_i$ of the first categorical space, determining a region of $[n, n+1]$; after determining a category of a current node is the $(n+1)$th category, judging whether n is larger than a categorical threshold $e_1$, wherein a value range of $e_1$ is $[0, (b_1-a_1)/c_1]$; if n is larger than the categorical threshold $e_1$, meaning the current node is a fixed node; otherwise, executing step (ddd);

(ddd), calculating an information processing capability of a non-fixed node, namely the information processing capability of the node except the fixed node, wherein a calculation formula thereof is:

$$z\left(i\right)=x_3 ,$$

wherein: $z(i)$ is the information processing capability of the non-fixed node; $x_3$ is the total amount of the node transaction service charge;

(3.4), according to a value of the information processing capability $z(i)$ of the non-fixed node, assuming a minimum value and a maximum value thereof respectively to be $z_{min}$ and $z_{max}$; normalizing a region of $[z_{min}, z_{max}]$ to $[a_2, b_2]$; with an interval of $c_2$, dividing the region into $(b_2-a_2)/c_2$ categories; and

(3.5), mapping the information processing capability $z(i)$ of the non-fixed node into a value $Class2_i$ of a second categorical space, wherein a calculation formula thereof is:

$$Class2_i = \frac{z\left(i\right)}{z_{max} - z_{min} +1} ,$$

wherein: $z_{min}$ is the minimum value of the information processing capability $z(i)$ ; $z_{max}$ is the maximum value of the information processing capability $z(i)$; $z(i)$ is the information processing capability of the non-fixed node;

according to the value $Class2_i$, determining that a region to which the current node belongs is [m, m+1] and the current node belongs to the (m+1)th category; making statistics of all nodes that m is larger than a categorical threshold $e_2$, wherein a value range of $e_2$ is $[0, (b_2-a_2)/c_2]$, and selecting R nodes to serve as random nodes, so as to complete the node selection, wherein a value of R is a random number.

```
                  ┌──────────────┐        ┌──────────────┐
                  │     Node     │        │   Threshold  │        ┌──────────────┐
┌────────────┐    │  capability  │        │     value    │        │     Node     │
│ Block data ├───▶│     value    ├───────▶│  calculation ├───────▶│   selection  │
└────────────┘    │  calculation │        └──────────────┘        └──────────────┘
                  └──────────────┘
```

Fig. 1

```
┌──────────────────┐   ┌──────────────────┐   ┌──────────────────┐
│ Node transaction │   │ Node information │   │ Total amount of  │
│      amount      │   │    processing    │   │ node transaction │
└──────────────────┘   │    capability    │   │  service charge  │
                       └──────────────────┘   └──────────────────┘
                                  │
                                  ▼
┌──────────────────────────────────────────────────────────────────┐
│ Based on block data, calculating a node capability value of       │
│                    each accounting node                           │
└──────────────────────────────────────────────────────────────────┘
                                  │
                                  ▼
┌──────────────────────────────────────────────────────────────────┐
│ Making statistics of threshold values of the node capability      │
│              values of every accounting node                      │
└──────────────────────────────────────────────────────────────────┘
            ┌──── Fixed node ─────┴──── Random node ────┐
            ▼                                            ▼
┌──────────────────────────────────────────────────────────────────┐
│                  Completing node selection                        │
└──────────────────────────────────────────────────────────────────┘
```

Fig. 2

Europäisches
Patentamt

European
Patent Office

Office européen
des brevets

# EUROPEAN SEARCH REPORT

Application Number

EP 18 18 1560

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Imran Bashir: "Mastering Blockchain" In: "Mastering Blockchain", 17 March 2017 (2017-03-17), Packt Publishing, XP055393678, ISBN: 978-1-78712-544-5 * the whole document * | 1-7 | INV. G06F21/64 G06Q20/38 |
| X | YEH LO-YAO ET AL: "NCHC Blockchain Construction Platform (NBCP): Rapidly Constructing Blockchain Nodes around Taiwan", 2017 ACM/IEEE JOINT CONFERENCE ON DIGITAL LIBRARIES (JCDL), IEEE, 19 June 2017 (2017-06-19), pages 1-2, XP033131358, DOI: 10.1109/JCDL.2017.7991607 [retrieved on 2017-07-25] * the whole document * | 1-7 | |
| X | CN 107 423 978 A (UNIV ZHENGZHOU) 1 December 2017 (2017-12-01) * the whole document * | 1-7 | |
| X | MORISHIMA SHIN ET AL: "Accelerating Blockchain Search of Full Nodes Using GPUs", 2018 26TH EUROMICRO INTERNATIONAL CONFERENCE ON PARALLEL, DISTRIBUTED AND NETWORK-BASED PROCESSING (PDP), IEEE, 21 March 2018 (2018-03-21), pages 244-248, XP033353732, DOI: 10.1109/PDP2018.2018.00041 [retrieved on 2018-06-06] * the whole document * | 1-7 | TECHNICAL FIELDS SEARCHED (IPC) G06F G06Q |

The present search report has been drawn up for all claims

| Place of search | Date of completion of the search | Examiner |
|---|---|---|
| The Hague | 21 September 2018 | Wolles, Bart |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 570 199 A1**

## ANNEX TO THE EUROPEAN SEARCH REPORT
## ON EUROPEAN PATENT APPLICATION NO.

EP 18 18 1560

This annex lists the patent family members relating to the patent documents cited in the above-mentioned European search report.
The members are as contained in the European Patent Office EDP file on
The European Patent Office is in no way liable for these particulars which are merely given for the purpose of information.

21-09-2018

| Patent document cited in search report | Publication date | Patent family member(s) | Publication date |
|---|---|---|---|
| CN 107423978 A | 01-12-2017 | NONE | |

EPO FORM P0459

For more details about this annex : see Official Journal of the European Patent Office, No. 12/82